# EUROPÄISCHE PATENTSCHRIFT

(11) **EP 1 414 905 B1**
(45) Veröffentlichungstag und Bekanntmachung des Hinweises auf die Patenterteilung: **25.01.2006**
(21) Anmeldenummer: 02752873.6
(22) Anmeldetag: 13.02.2002
(51) Int. Cl.: C08L 69/00

(54) **POLYCARBONAT-ZUSAMMENSETZUNGEN MIT VERBESSERTER SCHAUMHAFTUNG**
POLYCARBONATE COMPOSITIONS WITH IMPROVED FOAM ADHESION
COMPOSITIONS DE POLYCARBONATE POUR UNE MEILLEURE ADHERENCE DE LA MOUSSE

(30) Priorität: 26.02.2001 DE 10109226
(43) Veröffentlichungstag der Anmeldung: 06.05.2004
(73) Patentinhaber: Bayer MaterialScience AG, 51368 Leverkusen (DE)
(72) Erfinder: WARTH, Holger, 41539 Dormagen (DE); VOETZ, Matthias, 50735 Köln (DE); WEGENER, Dirk, 40789 Monheim (DE)
(86) Internationale Anmeldenummer: PCT/EP2002/001463
(87) Internationale Veröffentlichungsnummer: WO 2002/074860

(56) Entgegenhaltungen:
- EP-A- 0 640 655
- DE-A- 19 924 091
- US-A- 4 367 310
- US-A- 5 910 538

## Beschreibung

Die Erfindung betrifft Polycarbonat-Zusammensetzungen mit verbesserter Schaumhaftung sowie daraus hergestellte Verbundmaterialien mit Schaumstoffen wie Polyurethanen.

Es ist bekannt, dass Verbunde aus einem thermoplastischen Material und einem Polyurethan, insbesondere einem Polyurethanschaum, keine ausreichende Verbundhaftung aufweisen, da insbesondere nicht umgesetzte, niedermolekulare Reaktionskomponenten als Rückstände von der Herstellung der Kunststoffmaterialien in die Grenzflächen der Schichten segregieren. Es hat daher nicht an Versuchen gefehlt, die Verbundhaftung durch Einsatz von Haftvermittlerschichten zu verbessern. Dies ist aber für den Einsatz in der Kfz-Industrie, wo solche Verbundmaterialien in zunehmendem Maße Verwendung finden, nicht wünschenswert, da wegen der geforderten Aufarbeitungs- und Rückführmöglichkeiten möglichst wenig unterschiedliche Materialien zum Einsatz kommen sollen.

Aus der DE 199 24 091 A1 ist ein Verbundmaterial aus Polyurethan und einem thermoplastischen Kunststoff bekannt, in dem der Polyurethanschicht zur Haftungsverbesserung homogen verteilte Teilchen einer mittleren Teilchengröße von 1 bis 10 nm enthält, die mit einem thermoplastischen Kunststoff überzogen sind.

Aus der DE 199 24 092 A1 ist ferner ein Verbundmaterial aus Polyurethan und einem thermoplastischen Material bekannt, wobei zur Verbesserung der Haftung zwischen Polyurethan und thermoplastischer Schicht Polyurethan eingesetzt wird, das einen Restgehalt an freien ethergruppenhaltigen Reaktionskomponenten von höchstens 400 ppm aufweist.

Die JP 11-60851 A beschreibt schließlich eine thermoplastische Harzzusammensetzung, die (a) 3 bis 50 Gew.% eines Pfropfpolymerisats, (b) 5 bis 90 Gew.% eines Vinyl-Copolymeren, (c) 0,01 bis 5 Gew.% eines niedermolekularen oligomeren Styrol/Maleinsäureanhydrid-Copolymers mit einem mittleren Molekulargewicht M_{w} von 500 bis 10.000 und (d) 0,98 Gew.% eines aromatischen Polycarbonats enthält. Die in den Beispielen dieser Druckschrift beschriebenen Polycarbonat-Zusammensetzungen weisen einen Styrol/Maleinsäureanhydrid-Copolymerisat-Gehalt von 0,05 bis 0,2 Gew.% auf. Ferner wird eine Polycarbonat-Zusammensetzung mit einem Gehalt an Styrol/Maleinsäureanhydrid-Copolymerisat von 7 Gew.% beschrieben. Die in dieser Druckschrift beschriebenen Polycarbonat-Zusammensetzungen weisen eine verbesserte Kerbschlagzähigkeit, Hitzestabilität sowie verbesserte Verarbeitungseigenschaften auf und finden Verwendung als Gehäuseteile für Büromaschinen und elektrische Geräte. Der Einfluss von Styrol/Maleinsäureanhydrid-Copolymerisat auf die Schaumhaftung der Polycarbonat-Zusammensetzung bezüglich Polyurethan ist in dieser Druckschrift nicht beschrieben.

Der Erfindung liegt die Aufgabe zugrunde, Polycarbonat-Zusammensetzungen bereitzustellen, die eine ausgezeichnete Schaumhaftung, insbesondere gegenüber Polyurethanschäumen aufweisen. Die Polycarbonat-Zusammensetzungen sollen zur Herstellung von Verbundmaterialien mit handelsüblichen Polyurethanschäumen geeignet sein, ohne dass den Polyurethanschäumen zur Verbesserung der Adhäsionswirkung bestimmte Zusätze zugesetzt werden müssen.

Neben der verbesserten Schaumadhäsion sollen die Polycarbonat-Zusammensetzungen ferner hervorragende mechanische Eigenschaften und eine ausgezeichnete Verarbeitungsfähigkeit besitzen.

Diese Aufgabe wird erfindungsgemäß durch eine Polycarbonat-Zusammensetzung gelöst, die
(A) aromatisches Polycarbonat und/oder Polyestercarbonat,
(B) Pfropfpolymerisat und
(C) Copolymerisat aus Styrol und wenigstens einem Monomeren enthaltend wenigstens eine Carboxylgruppe, wobei das Copolymerisat ein mittleres Molekulargewicht M_{w} von ≥ 10.500 g/Mol aufweist, und wobei das Copolymerisat eine oder mehrere andere Vinylcomonomere enthalten kann,

enthält.

Überraschend wurde gefunden, dass bei Zusatz von Copolymerisat aus Styrol und carboxylgruppenhaltigen Monomeren zu schlagzähmodifiziertem Polycarbonat eine erhebliche Verbesserung der Schaumadhäsion, insbesondere der Schaumadhäsion gegenüber Polyurethanschäumen, erzielt werden kann. Gleichzeitig weisen die erfindungsgemäßen Polycarbonat-Zusammensetzungen ausgezeichnete mechanische Eigenschaften auf.

Gemäß einer bevorzugten Ausführungsform der Erfindung enthält die Polycarbonat-Zusammensetzung das Copolymerisat aus Styrol und carboxylgruppenhaltigen Monomeren (Komponente C) in einer Menge von 0,4 bis 7, vorzugsweise 1 bis 4, besonders bevorzugt 1 bis 3 Gew.%, insbesondere von 1,5 bis 2,5 Gew%. Überraschend wurde festgestellt, dass in diesem Mengenbereich eine besonders starke Verbesserung der Schaumhaftung, insbesondere der Schaumhaftung gegenüber Polyurethanschäumen, erzielt wird.

Die erfindungsgemäßen Polycarbonat-Zusammensetzungen weisen neben einer ausgezeichneten Kerbschlagzähigkeit und einer hervorragenden Schmelzeviskosität im Verbund mit Polyurethan nach Durchführung eines doppelten Klimawechseltests über 24 Stunden mit Zyklen von -40 bis 80°C und von 0 bis 80 % relative Luftfeuchtigkeit eine Haftungsverschlechterung von weniger als 5 % auf. Aufgrund ihrer hervorragenden Schaumhaftungseigenschaften sind die erfindungsgemäßen Polycarbonat-Formmassen insbesondere zur Herstellung von Verbundmaterialien mit Polyurethanschäumen geeignet.

Die einzelnen Komponenten der erfindungsgemäßen Polycarbonat-Zusammensetzung werden nachfolgend beispielhaft erläutert.

### Komponente A

Erfindungsgemäß geeignete aromatische Polycarbonate und/oder aromatische Polyestercarbonate gemäß Komponente A sind literaturbekannt oder nach literaturbekannten Verfahren herstellbar (zur Herstellung aromatischer Polycarbonate siehe beispielsweise Schnell, "Chemistry and Physics of Polycarbonates", Interscience Publishers, 1964 sowie die DE-AS 1 495 626, DE-A 2 232 877, DE-A 2 703 376, DE-A 2 714 544, DE-A 3 000 610, DE-A 3 832 396; zur Herstellung aromatischer Polyestercarbonate, z.B. DE-A 3 077 934).

Die Herstellung aromatischer Polycarbonate erfolgt z.B. durch Umsetzung von Diphenolen mit Kohlensäurehalogeniden, vorzugsweise Phosgen und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern, beispielsweise Monophenolen und gegebenenfalls unter Verwendung von trifunktionellen oder mehr als trifunktionellen Verzweigern, beispielsweise Triphenolen oder Tetraphenolen.

Diphenole zur Herstellung der aromatischen Polycarbonate und/oder aromatischen Polyestercarbonate sind vorzugsweise solche der Formel (I) 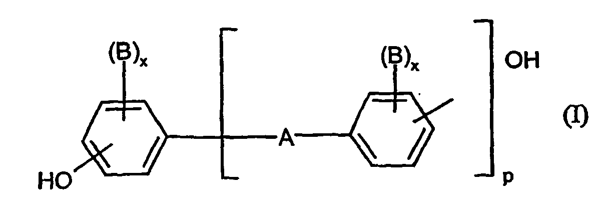 wobei
- A: eine Einfachbindung, C₁ bis C₅ Alkylen, C₂ bis C₅-Alkyliden, C₅ bis C₆₋Cycloalkyliden, -O-, -SO-, -CO-, -S-, -SO₂-, C₆ bis C₁₂-Arylen, an das weitere aromatische gegebenenfalls Heteroatome enthaltende Ringe kondensiert sein können,
oder ein Rest der Formel (II) oder (III) 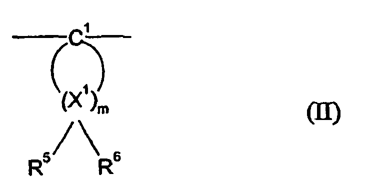 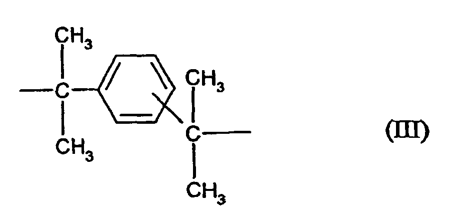
- B: jeweils C₁ bis C₁₂-Alkyl, vorzugsweise Methyl, Halogen, vorzugsweise Chlor und/oder Brom
- x: jeweils unabhängig voneinander 0, 1 oder 2,
- p: 1 oder 0 sind, und
- R⁵ und R⁶: für jedes X¹ individuell wählbar, unabhängig voneinander Wasserstoff oder C₁ bis C₆-Alkyl, vorzugsweise Wasserstoff, Methyl oder Ethyl,
- X¹: Kohlenstoff und
- m: eine ganze Zahl von 4 bis 7, bevorzugt 4 oder 5 bedeuten, mit der Maßgabe, dass an mindestens einem Atom X¹, R⁵ und R⁶ gleichzeitig Alkyl sind.

Bevorzugte Diphenole sind Hydrochinon, Resorcin, Dihydroxydiphenole, Bis-(hydroxyphenyl)-C₁-C₅-alkane, Bis-(hydroxyphenyl)-C₅-C₆-cycloalkane, Bis-(hydroxyphenyl)-ether, Bis-(hydroxyphenyl)-sulfoxide, Bis-(hydroxyphenyl)-ketone, Bis-(hydroxyphenyl)-sulfone und α,α-Bis-(hydroxyphenyl)-diisopropyl-benzole sowie deren kernbromierte und/oder kernchlorierte Derivate.

Besonders bevorzugte Diphenole sind 4,4'-Dihydroxydiphenyl, Bisphenol-A, 2,4-Bis(4-hydroxyphenyl)-2-methylbutan, 1,1-Bis-(4-hydroxyphenyl)-cyclohexan, 1,1-Bis-(4-hydroxyphenyl)-3.3.5-trimethylcyclohexan, 4,4'-Dihydroxydiphenylsulfid, 4,4'-Dihydroxydiphenylsulfon sowie deren di- und tetrabromierten oder chlorierten Derivate wie beispielsweise 2,2-Bis(3-Chlor-4-hydroxyphenyl)-propan, 2,2-Bis-(3,5-dichlor-4-hydroxyphenyl)-propan oder 2,2-Bis-(3,5-dibrom-4-hydroxyphenyl)-propan.

Insbesondere bevorzugt ist 2,2-Bis-(4-hydroxyphenyl)-propan (Bisphenol-A).

Es können die Diphenole einzeln oder als beliebige Mischungen eingesetzt werden.

Die Diphenole sind literaturbekannt oder nach literaturbekannten Verfahren erhältlich.

Für die Herstellung der thermoplastischen, aromatischen Polycarbonate geeignete Kettenabbrecher sind beispielsweise Phenol, p-Chloiphenol, p-tert.-Butylphenol oder 2,4,6-Tribromphenol, aber auch langkettige Alkylphenole, wie 4-(1,3-Tetramethylbutyl)-phenol gemäß DE-A 2 842 005 oder Monoalkylphenol bzw. Dialkylphenole mit insgesamt 8 bis 20 C-Atomen in den Alkylsubstituenten, wie 3,5-di-tert.-Butylphenol, p-iso-Octylphenol, p-tert.-Octylphenol, p-Dodecylphenol und 2-(3,5-Dimethylheptyl)-phenol und 4-(3,5-Dimethylheptyl)-phenol. Die Menge an einzusetzenden Kettenabbrechern beträgt im allgemeinen zwischen 0,5 Mol%, und 10 Mol%, bezogen auf die Molsumme der jeweils eingesetzten Diphenole.

Die thermoplastischen, aromatischen Polycarbonate haben mittlere Gewichtsmittelmolekulargewichte (M_{w}, gemessen z.B. durch Ultrazentrifuge oder Streulichtmessung) von 10.000 bis 200.000, vorzugsweise 15.000 bis 80.000.

Die thermoplastischen, aromatischen Polycarbonate können in bekannter Weise verzweigt sein, und zwar vorzugsweise durch den Einbau von 0,05 bis 2,0 Mol%, bezogen auf die Summe der eingesetzten Diphenole, an dreifunktionellen oder mehr als dreifunktionellen Verbindungen, beispielsweise solchen mit drei und mehr phenolischen Gruppen.

Geeignet sind sowohl Homopolycarbonate als auch Copolycarbonate. Zur Herstellung erfindungsgemäßer Copolycarbonate gemäß Komponente A können auch 1 bis 25 Gew.%, vorzugsweise 2,5 bis 25 Gew.% (bezogen auf die Gesamtmenge an einzusetzenden Diphenolen) Polydiorganosiloxane mit Hydroxyaryloxy-Endgruppen eingesetzt werden. Diese sind bekannt (US 3 419 634) und nach literaturbekannten Verfahren herstellbar. Die Herstellung Polydiorganosiloxanhaltiger Copolycarbonate ist in der DE A 3 334 782 beschrieben.

Bevorzugte Polycarbonate sind neben den Bisphenol-A-Homopolycarbonaten die Copolycarbonate von Bisphenol-A mit bis zu 15 Mol%, bezogen auf die Molsummen an Diphenolen, anderen als bevorzugt oder besonders bevorzugt genannten Diphenolen, insbesondere 2,2-Bis(3,5-dibrom-4-hydroxyphenyl)-propan.

Aromatische Dicarbonsäuredihalogenide zur Herstellung von aromatischen Polyestercarbonaten sind vorzugsweise die Disäuredichloride der Isophthalsäure, Terephthalsäure, Diphenylether-4,4'-dicarbonsäure und der Naphthalin-2,6-dicarbonsäure.

Besonders bevorzugt sind Gemische der Disäuredichloride der Isophthalsäure und der Terephthalsäure im Verhältnis zwischen 1:20 und 20:1.

Bei der Herstellung von Polyestercarbonaten wird zusätzlich ein Kohlensäurehalogenid, vorzugsweise Phosgen, als bifunktionelles Säurederivat mit verwendet.

Als Kettenabbrecher für die Herstellung der aromatischen Polyestercarbonate kommen außer den bereits genannten Monophenolen noch deren Chlorkohlensäureester sowie die Säurechloride von aromatischen Monocarbonsäuren, die gegebenenfalls durch C₁-C₂₂-Alkylgruppen oder durch Halogenatome substituiert sein können, sowie aliphatische C₂-C₂₂-Monocarbonsäurechloride in Betracht.

Die Menge an Kettenabbrechern beträgt jeweils 0,1 bis 10 Mol%, bezogen im Falle der phenolischen Kettenabbrecher auf Mol Diphenol und im Falle von Monocarbonsäurechlorid-Kettenabbrecher auf Mol Dicarbonsäuredichloride.

Die aromatischen Polyestercarbonate können auch aromatische Hydroxycarbonsäuren eingebaut enthalten.

Die aromatischen Polyestercarbonate können sowohl linear als auch in bekannter Weise verzweigt sein (siehe dazu DE-A 2 940 024 und DE-A 3 007 934).

Als Verzweigungsmittel können beispielsweise drei- oder mehrfunktionelle Carbonsäurechloride, wie Trimesinsäuretrichlorid, Cyanursäuretrichlorid, 3,3'-,4,4'-Benzophenontetracarbonsäuretetrachlorid,1,4,5,8-Napthalintetracarbonsäuretetrachlorid oder Pyromellithsäuretetrachlorid, in Mengen von 0,01 bis 1,0 Mol%, bezogen auf eingesetzte Dicarbonsäuredichloride, oder drei- oder mehrfunktionelle Phenole, wie Phloroglucin, 4,6-Dimethyl-2,4,6-tri-(4-hydroxyphenyl)-hepten-2,4,4-Dimethyl-2,4-6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis[4,4-bis(4-hydroxyphenyl)-cyclohexyl]-propan, 2,4-Bis(4-hydroxyphenylisopropyl)-phenol, Tetra-(4-hydroxyphenyl)-methan, 2,6-Bis(2-hydroxy-5-methylbenzyl)-4-methylphenol, 2-(4-Hydroxyphenyl)-2-(2,4-dihydroxyphenyl)-propan, Tetra-(4-[4-hydroxyphenyl-isopropyl]-phenoxy)-methan, 1,4-Bis[4,4'-dihydroxytriphenyl)-methyl]-benzol, in Mengen von 0,01 bis 1,0 Mol% bezogen auf eingesetzte Diphenole verwendet werden. Phenolische Verzweigungsmittel können mit den Diphenolen vorgelegt, Säurechlorid-Verzweigungsmittel können zusammen mit den Säuredichloriden eingetragen Werden.

In den thermoplastischen, aromatischen Polyestercarbonaten kann der Anteil an Carbonatstruktureinheiten beliebig variieren. Vorzugsweise beträgt der Anteil an Carbonatgruppen bis zu 100 Mol%, insbesondere bis zu 80 Mol%, besonders bevorzugt bis zu 50 Mol%, bezogen auf die Summe an Estergruppen und Carbonatgruppen. Sowohl der Ester- als auch der Carbonatanteil der aromatischen Polyestercarbonate kann in Form von Blöcken oder statistisch verteilt im Polykondensat vorliegen.

Die relative Lösungsviskosität (ηᵣₑₗ) der aromatischen Polycarbonate und Polyestercarbonate liegt im Bereich 1,18 bis 1,4, vorzugsweise 1,20 bis 1,32 (gemessen an Lösungen von 0,5 g Polycarbonat oder Polyestercarbonat in 100 ml Methylenchlorid-Lösung bei 25°C).

Die thermoplastischen, aromatischen Polycarbonate und Polyestercarbonate können allein oder im beliebigen Gemisch eingesetzt werden.

Die Komponente A kann in der erfindungsgemäßen Zusammensetzung in einer Menge von vorzugsweise 5 bis 98 Gew.%, besonders bevorzugt 10 bis 90 Gew.% und in am meisten bevorzugter Weise 40 bis 75 Gew.%, bezogen auf die Masse der Zusammensetzung, enthalten sein.

### Komponente B

Die Komponente B umfasst ein oder mehrere Pfropfpolymerisate von
- B.1: 5 bis 95, vorzugsweise 30 bis 90 Gew%, wenigstens eines Vinybnonomeren auf
- B.2: 95 bis 5, vorzugsweise 70 bis 10 Gew.% einer oder mehrerer Pfropfgrundlagen mit Glasübergangstemperaturen < 10°C, vorzugsweise < 0°C, besonders bevorzugt < -10°C.

Die Pfropfgrundlage B.2 hat im allgemeinen eine mittlere Teilchengröße (d₅₀-Wert) von 0,05 bis 10 µm, vorzugsweise 0,1 bis 5 µm, besonders bevorzugt 0,2 bis 1 µm.

Monomere B.1 sind vorzugsweise Gemische aus
- B.1.1: 50 bis 99 Gew.-Teilen Vinylaromaten und/oder kernsubstituierten Vinylaromaten (wie beispielsweise Styrol, α-Methylstyrol, p-Methylstyrol, p-Chlorstyrol) und/oder Methacrylsäure-(C₁-C₈)-Alkylester (wie Methylmethacrylat, Ethylmethacrylat) und
- B.1.2: 1 bis 50 Gew.-Teilen Vinylcyanide (ungesättigte Nitrile wie Acrylnitril und Methacrylnitril) und/oder (Meth)Acrylsäure-(C₁-C₈)-Alkylester (wie Methylmethacrylat, n-Butylacrylat, tert.-Butylacrylat) und/oder Imide ungesättigter Carbonsäuren (beispielsweise N-Phenyl-Maleinimid).

Bevorzugte Monomere B.1.1 sind ausgewählt aus mindestens einem der Monomere Styrol, α-Methylstyrol und Methylmethacrylat, bevorzugte Monomere B.1.2 sind ausgewählt aus mindestens einem der Monomere Acrylnitril und Methylmethacrylat.

Besonders bevorzugte Monomere sind B.1.1 Styrol und B.1.2 Acrylnitril.

Für die Pfropfpolymerisate B geeignete Pfropfgrundlagen B.2 sind beispielsweise Dienkautschuke, EP(D)M-Kautschuke, also solche auf Basis Ethylen/Propylen und gegebenenfalls Dien, Acrylat-, Polyurethan-, Silikon-, Chloropren und Ethylen/Vinylacetat-Kautschuke.

Bevorzugte Pfropfgrundlagen B.2 sind Dienkautschuke (z.B. auf Basis Butadien, Isopren etc.) oder Gemische von Dienkautschuken oder Copolymerisate von Dienkautschuken oder deren Gemischen mit weiteren copolymerisierbaren Monomeren (z.B. gemäß B.1.1 und B.1.2), mit der Maßgabe, dass die Glasübergangstemperatur der Komponente B.2 unterhalb < 10°C, vorzugsweise <0°C, besonders bevorzugt <-10°C liegt.

Besonders bevorzugt ist reiner Polybutadienkautschuk und EPDM-Kautschuke.

Besonders bevorzugte Polymerisate B sind z.B. ABS-Polymerisate (Emulsions-, Masse- und Suspensions-ABS), wie sie z.B. in der DE-A 2 035 390 (=US-PS 3 644 574) oder in der DE-A 2 248 242 (=GB-PS 1 409 275) bzw. in Ullmanns, Enzyklopädie der Technischen Chemie, Bd. 19 (1980), S. 280 ff. beschrieben sind. Der Gelanteil der Pfropfgrundlage B.2 beträgt mindestens 30 Gew.%, vorzugsweise mindestens 40 Gew.% (in Toluol gemessen).

Die Pfropfpolymerisate B werden durch radikalische Polymerisation, z.B. durch Emulsions-, Suspensions-, Lösungs- oder Massepolymerisation, vorzugsweise durch Emulsions- oder Massepolymerisation hergestellt.

Besonders geeignete Pfropfkautschuke sind auch ABS-Polymerisate, die durch Redox-Initüerung mit einem Initiatorsystem aus organischem Hydroperoxid und Ascorbinsäure gemäß US-P 4 937 285 hergestellt werden.

Da bei der Pfropfreaktion die Pfropfinonomeren bekanntlich nicht unbedingt vollständig auf die Pfropfgrundlage aufgepfropft werden, werden erfindungsgemäß unter Pfropfpolymerisaten B auch solche Produkte verstanden, die durch (Co)Polymerisation der Pfropfinonomere in Gegenwart der Pfropfgrundlage gewonnen werden und bei der Aufarbeitung mit anfallen.

Geeignete Acrylatkautschuke gemäß B.2 der Polymerisate B sind vorzugsweise Polymerisate aus Acrylsäurealkylestern, gegebenenfalls mit bis zu 40 Gew%, bezogen auf B.2 anderen polymerisierbaren, ethylenisch ungesättigten Monomeren. Zu den bevorzugten polymerisierbaren Acrylsäureestern gehören C₁-C₈-Alkylester, beispielsweise Methyl-, Ethyl-, Butyl-, n-Octyl- und 2-Ethylhexylester; Halogenalkylester, vorzugsweise Halogen-C₁-C₈-alkylester, wie Chlorethylacrylat sowie Mischungen dieser Monomeren.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen, oder gesättigter Polyole mit 2 bis 4 OH-Gruppen und 2 bis 20 C-Atomen, wie Ethylenglykoldimethacrylat, Allylmethacrylat; mehrfach ungesättigte heterocyclische Verbindungen, wie Trivinyl- und Triallylcyanurat; polyfunktionelle Vinylverbindungen, wie Di- und Trivinylbenzole; aber auch Triallylphosphat und Diallylphthalat.

Bevorzugte vernetzende Monomere sind Allylmethacrylat, Ethylenglykoldimethacrylat, Diallylphthalat und heterocyclische Verbindungen, die mindestens drei ethylenisch ungesättigte Gruppen aufweisen.

Besonders bevorzugte vernetzende Monomere sind die cyclischen Monomere Triallylcyanurat, Triallylisocyanurat, Triacryloylhexahydro-s-triazin, Triallylbenzole. Die Menge der vernetzten Monomere beträgt vorzugsweise 0,02 bis 5, insbesondere 0,05 bis 2 Gew.%, bezogen auf die Pfropfgrundlage B.2.

Bei cyclischen vernetzenden Monomeren mit mindestens drei ethylenisch ungesättigten Gruppen ist es vorteilhaft, die Menge auf unter 1 Gew.% der Pfropfgrundlage B.2 zu beschränken.

Bevorzugte "andere" polymerisierbare, ethylenisch ungesättigte Monomere, die neben den Acrylsäureestern gegebenenfalls zur Herstellung der Pfropfgrundlage B.2 dienen können, sind z.B. Acrylnitril, Styrol, α-Methylstyrol, Acrylamide, Vinyl-C₁₋C₆-alkylether, Methylmethacrylat, Butadien. Bevorzugte Acrylatkautschuke als Pfropfgrundlage B.2 sind Emulsionspolymerisate, die einen Gelgehalt von mindestens 60 Gew.% aufweisen.

Weitere geeignete Pfropfgrundlagen gemäß B.2 sind Silikonkautschuke mit pfropfaktiven Stellen, wie sie in den DE-A 3 704 657, DE-A 3 704 655, DE-A 3 631 540 und DE-A 3 631 539 beschrieben werden.

Der Gelgehalt der Pfropfgrundlage B.2 wird bei 25°C in einem geeigneten Lösungsmittel bestimmt (M. Hoffmann, H. Krömer, R. Kuhn, Polymeranalytik I und II, Georg Thieme-Verlag, Stuttgart 1977).

Die mittlere Teilchengröße d₅₀ ist der Durchmesser, oberhalb und unterhalb dessen jeweils 50 Gew.% der Teilchen liegen. Er kann mittels Ultrazentrifugenmessung (W. Scholtan, H. Lange, Kolloid, Z. und Z. Polymere 250 (1972), 782-1796) bestimmt werden.

Die Komponente B kann in der erfindungsgemäßen Zusammensetzung in einer Menge von vorzugsweise 1 bis 94 Gew.%, besonders bevorzugt 2 bis 80 Gew.-%, insbesondere 5 bis 60 Gew.-% und ganz besonders bevorzugt 10 bis 50 Gew.%, bezogen auf die Masse der Zusammensetzung, enthalten sein.

### Komponente C

Die Komponente C umfasst ein oder mehrere Copolymerisate aus Styrol und wenigstens einem carboxylgruppenhaltigen Monomeren, wobei das Copolymerisat ein mittleres Molekulargewicht M_{w} von ≥ 10.500 aufweist. Ein Beispiel für ein erfindungsgemäß einsetzbares carboxylgruppenhaltiges Monomer ist Maleinsäureanhydrid. Vorzugsweise werden Copolymerisate mit einem Gehalt von 1 bis 40, vorzugsweise 5 bis 25 Gew.%, bezogen auf das Copolymer, carboxylgruppenhaltigen Monomeren, vorzugsweise Maleinsäureanhydrid, eingesetzt. Die als Komponente C eingesetzten Copolymerisate weisen vorzugsweise ein mittleres Molekulargewicht M_{w} (Gewichtsmittel ermittelt durch Lichtstreuung oder Sedimentation) von 10.500 bis 300.000, insbesondere von 15.000 bis 200.000 und am bevorzugtesten von 60.000 bis 150.000 auf. Die Copolymerisate sind vorzugsweise harzartig, thermoplastisch und kautschukfrei. Als weitere Comonomere können Acrylnitril, C₁-C₆-Alkylacrylate oder C₁-C₆-Alkylmethacrylate in einer Menge bis zu 40, vorzugsweise 0 bis 30, insbesondere 0 bis 20 Gew.-% (bezogen auf das Copolymer) im Copolymer enthalten sein.

Die Copolymerisate der Komponente C sind bekannt und lassen sich durch radikalische Polymerisation, insbesondere durch Emulsions-, Suspensions-, Lösungs- oder Massepolymerisation herstellen.

Besonderes bevorzugte Copolymerisate sind statistisch aufgebaute Copolymerisate aus Styrol und Maleinsäureanhydrid, die bevorzugt durch eine kontinuierliche Masse- oder Lösungspolymerisation nach bekannten Methoden aus den entsprechenden Monomeren hergestellt werden können.

Die Komponente C kann in der erfindungsgemäßen Zusammensetzung in einer Menge von vorzugsweise 0,4 bis 7 Gew.%, insbesondere 1 bis 4 Gew.%, bezogen auf die Masse der Zusammensetzung, enthalten sein. Besonders gute Ergebnisse bezüglich der Schaumhaftung gegenüber Polyurethanschäumen werden erzielt, wenn Komponente C in einer Menge von vorzugsweise 1 bis 3 Gew.%, insbesondere 1,5 bis 2,5 Gew.%, bezogen auf die Zusammensetzung, enthalten ist.

Der Zusammensetzung können weitere Komponenten wie thermoplastische Polymere und Polyester zugesetzt werden. Vorzugsweise können die erfindungsgemäßen Zusammensetzungen thermoplastische Vinyl(Co)Polymerisate und/oder Polyalkylenterephthalate (Komponente D) enthalten.

Der Zusammensetzung können weitere Komponenten, wie thermoplastische Polymere und Polyester zugesetzt werden. Vorzugsweise können die erfindungsgemäßen Zusammensetzungen thermoplastische Vinyl(Go)Polymerisate und/oder Polyalkylenterephthalate (Komponente D) enthalten.

### Komponente D

Die Komponente D umfasst ein oder mehrere thermoplastische Vinyl(Co)Polymerisate D.1, welche verschieden von Komponente C sind, und/oder Polyalkylenterephthalate D.2.

Geeignet sind als Vinyl(Co)Polymerisate D.1 Polymerisate von mindestens einem Monomeren aus der Gruppe der Vinylaromaten, Vinylcyanide (ungesättigte Nitrile), (Meth)Acrylsäure-(C₁ bis C₈)-Alkylester, Imide-Derivate ungesättigter Carbonsäuren. Insbesondere geeignet sind (Co)Polymerisate aus
- D.1.1: 50 bis 99, vorzugsweise 60 bis 80 Gew.-Teilen Vinylaromaten und/oder kernsubstituierten Vinylaromaten wie beispielsweise Styrol, α-Methylstyrol, p-Methylstyrol, p-Chlorstyrol) und/oder Methacrylsäure-(C₁ bis C₈)-Alkylester wie Methylmethacrylat, Ethylmethacrylat), und
- D.1.2: 1 bis 50, vorzugsweise 20 bis 40 Gew.-Teilen Vinylcyanide (ungesättigte Nitrile) wie Acrylnitril und Methacrylnitril und/oder (Meth)Acrylsäure-(C₁C₈)-Alkylester (wie Methylmethacrylat, n-Butylacrylat, tert.-Butylacrylat).

Die (Co)Polymerisate D.1 sind harzartig, thermoplastisch und kautschukfrei.

Besonders bevorzugt ist das Copolymerisat aus D.1.1 Styrol und D.1.2 Acrylnitril.

Die (Co)Polymerisate gemäß D.1 sind bekannt und lassen sich durch radikalische Polymerisation, insbesondere durch Emulsions-, Suspensions-, Lösungs- oder Massepolymerisation herstellen. Die (Co)Polymerisate besitzen vorzugsweise mittlere Molekulargewichte M_{w} (Gewichtsmittel, ermittelt durch Lichtstreuung oder Sedimentation) zwischen 15.000 und 200.000.

Die Polyalkylenterephthalate der Komponente D.2 sind Reaktionsprodukte aus aromatischen Dicarbonsäuren oder ihren reaktionsfähigen Derivaten, wie Dimethylestern oder Anhydriden, und aliphatischen, cycloaliphatischen oder araliphatischen Diolen sowie Mischungen dieser Reaktionsprodukte.

Bevorzugte Polyalkylenterephthalate enthalten mindestens 80 Gew.%, vorzugsweise mindestens 90 Gew.%, bezogen auf die Dicarbonsäurekomponente Terephthalsäurereste und mindestens 80 Gew.%, vorzugsweise mindestens 90 Mol%, bezogen auf die Diolkomponente Ethylenglykol- und/oder Butandiol-1,4-keste.

Die bevorzugten Polyalkylenterephthalate können neben Terephthalsäureresten bis zu 20 Mol%, vorzugsweise bis zu 10 Mol%, Reste anderer aromatischer oder cycloaliphatischer Dicarbonsäuren mit 8 bis 14 C-Atomen oder aliphatischer Dicarbonsäuren mit 4 bis 12 C-Atomen enthalten, wie Reste von Phthalsäure, Isophthalsäure, Naphthalin-2,6-dicarbonsäure, 4,4'-Diphenyldicarbonsäure, Bernsteinsäure, Adipinsäure, Sebacinsäure, Azelainsäure, Cyclohexandiessigsäure.

Die bevorzugten Polyalkylenterephthalate können neben Ethylenglykol- oder Butandiol-1,4-Resten bis zu 20 Mol%, vorzugsweise bis zu 10 Mol%, andere aliphatische Diole mit 3 bis 12 C-Atomen oder cycloaliphatische Diole mit 6 bis 21 C-Atomen enthalten, z.B. Reste von Propandiol-1,3, 2-Ethylpropandiol-1,3, Neopentylglykol, Pentandiol-1,5, Hexandiol-1,6, Cyclohexandimethanol-1,4, 3-Ethylpentandiol-2,4, 2-Methylpentandiol-2,4, 2,2,4-Trimethylpentandiol-1,3, 2-Ethylhexandiol-1,3, 2,2-Diethylpropandiol-1,3, Hexandiol-2,5, 1,4-Di-(β-hydroxyethoxy)-benzol, 2,2-Bis-(4-hydroxycyclohexyl)-propan, 2,4-Dihydroxy-1,1,3,3-tetramethylcyclobutan, 2,2-Bis-(4-β-hydroxyethoxy-phenyl)-propan und 2,2-Bis-(4-hydroxypropoxyphenyl)-propan (DE-A 2 407 674,2 407 776,2 715 932).

Die Polyalkylenterephthalate können durch Einbau relativ kleiner Mengen 3- oder 4-wertiger Alkohole oder 3- oder 4-basischer Carbonsäuren, z.B. gemäß DE-A 1 900 270 und US 3 692 744, verzweigt werden. Beispiele bevorzugter Verzweigungsmittel sind Trimesinsäure, Trimellithsäure, Trimethylolethan und -propan und Pentaerythrit.

Besonders bevorzugt sind Polyalkylenterephthalate, die allein aus Terephthalsäure und deren reaktionsfähigen Derivaten (z.B. deren Dialkylestern) und Ethylenglykol und/oder Butandiol-1,4 hergestellt worden sind, und Mischungen dieser Polyalkylenterephthalate.

Mischungen von Polyalkylenterephthalaten enthalten 1 bis 50 Gew.%, vorzugsweise 1 bis 30 Gew.%, Polyethylenterephthalat und 50 bis 99 Gew.%, vorzugsweise 70 bis 99 Gew.%, Polybutylenterephthalat.

Die vorzugsweise verwendeten Polyalkylenterephthalate besitzen im allgemeinen eine Grenzviskosität von 0,4 bis 1,5 dl/g, vorzugsweise 0,5 bis 1,2 dl/g, gemessen in Phenol/o-Dichlorbenzol (1:1 Gewichtsteile) bei 25°C im Ubbelohde-Viskosimeter.

Die Polyalkylenterephthalate lassen sich nach bekannten Methoden herstellen (s. z.B. Kunststoff-Handbuch, Band VIII, S. 695 ff., Carl-Hanser-Verlag, München 1973).

Die Komponente D kann in der erfindungsgemäßen Zusammensetzung in einer Menge von vorzugsweise 0 bis 80 Gew.%, besonders bevorzugt 1 bis 60 Gew.% und in am meisten bevorzugter Weise 2 bis 25 Gew.%, bezogen auf die Masse der Zusammensetzung, enthalten sein.

### Komponente E

Die erfindungsgemäßen Polycarbonat-Zusammensetzungen können übliche Additive wie Flammschutzmittel, Antidrippingmittel, feinstteilige anorganische Verbindungen, Gleit- und Entformungsmittel, Nukleierungsmittel, Antistatika, Stabilisatoren, Füll- und Verstärkungsstoffe sowie Farbstoffe und Pigmente enthalten.

Die erfindungsgemäßen Zusammensetzungen können im allgemeinen 0,01 bis 20 Gew.%, bezogen auf die Gesamt-Zusammensetzung, Flammschutzmittel enthalten. Beispielhaft werden als Flammschutzmittel organische Halogenverbindungen wie Decabrombisphenylether, Tetrabrombisphenol, anorganische Halogenverbindungen wie Ammoniumbromid, Stickstoffverbindungen wie Melamin, Melaminformaldehyd-Harze, anorganische Hydroxidverbindungen wie Mg-Al-Hydroxid, anorganische Verbindungen wie Aluminiumoxide, Titandioxide, Antimonoxide, Bariummetaborat, Hydroxoantimonat, Zirkonoxid, Zirkonhydroxid, Molybdänoxid, Ammoniummolybdat, Zinnborat, Ammoniumborat, Bariummetaborat und Zinnoxid sowie Siloxanverbindungen genannt.

Als Flammschutzverbindungen können ferner Phosphorverbindungen, wie sie in der EP-A-363 608, EP-A-345 522 oder EP-A-640 655 beschrieben sind, eingesetzt werden.

Die einsetzbaren anorganischen Verbindungen umfassen Verbindungen eines oder mehrerer Metalle der 1. bis 5. Hauptgruppe und der 1. bis 8. Nebengruppe des Periodensystems, bevorzugt der 2. bis 5. Hauptgruppe und der 4. bis 8. Nebengruppe, besonders bevorzugt der 3. bis 5. Hauptgruppe und der 4. bis 8. Nebengruppe mit den Elementen Sauerstoff, Schwefel, Bor, Phosphor, Kohlenstoff, Stickstoff, Wasserstoff und/oder Silicium.

Beispiele für solche Verbindungen sind Oxide, Hydroxide, wasserhaltige Oxide, Sulfate, Sulfite, Sulfide, Carbonate, Carbide, Nitrate, Nitrite, Nitride, Borate, Silikate, Phosphate, Hydride, Phosphite oder Phosphonate. Hierzu zählen beispielsweise TiN, TiO₂, SnO₂, WC, ZnO, Al₂O₃, AlO(OH), ZrO₂, Sb₂O₃, SiO₂, Eisenoxide, NaSO₄, BaSO₄, Vanadiumoxide, Zinkborat, Silikate wie Al-Silikate, Mg-Silikate, ein, zwei, dreidimensionale Silikate, Mischungen und dotierte Verbindungen sind ebenfalls verwendbar. Des weiteren können diese nanoskaligen Partikel mit organischen Molekülen oberflächenmodifiziert sein, um eine bessere Verträglichkeit mit den Polymeren zu erzielen. Auf diese Weise lassen sich hydrophobe oder hydrophile Oberflächen erzeugen.

Die durchschnittlichen Teilchendurchmesser der anorganischen Verbindungen sind kleiner gleich 200 nm, bevorzugt kleiner gleich 150 nm, insbesondere 1 bis 100 nm.

Teilchengröße und Teilchendurchmesser bedeutet immer den mittleren Teilchendurchmesser d₅₀, ermittelt durch Ultrazentrifugenmessungen nach W. Scholtan et al. Kolloid-Z. und Z. Polymere 250 (1972), S. 782 bis 796.

Die anorganischen Verbindungen können als Pulver, Pasten, Sole, Dispersionen oder Suspensionen vorliegen. Durch Ausfällen können aus Dispersionen, Solen oder Suspensionen Pulver erhalten werden.

Die Pulver können nach üblichen Verfahren in die thermoplastischen Kunststoffe eingearbeitet werden, beispielsweise durch direktes Kneten oder Extrudieren der Bestandteile der Formmasse und den feinstteiligen anorganischen Pulvern. Bevorzugte Verfahren stellen die Herstellung eines Masterbatches, z.B. in Flammschutzadditiven, anderen Additiven, Monomeren, Lösungsmitteln, in Komponente A oder die Cofällung von Dispersionen der Komponenten B oder C mit Dispersionen, Suspensionen, Pasten oder Solen der feinstteiligen anorganischen Materialien dar.

Als Füll- und Verstärkungsmaterialien kommen z.B. Glasfasern, gegebenenfalls geschnitten oder gemahlen, Glasperlen, Glaskugeln, blättchenförmiges Verstärkungsmaterial wie Kaolin, Talk, Glimmer, Silikate, Quarz, Talkum, Titandioxid, Wollastonit, Mika, Kohlefasem oder deren Mischungen in Betracht. Vorzugsweise werden als Verstärkungsmaterial geschnittene oder gemahlene Glasfasern eingesetzt. Bevorzugte Füllstoffe, die auch verstärkend wirken können, sind Glaskugeln, Glimmer, Silikate, Quarz, Talkum, Titandioxid und/oder Wollastonit.

Die Summe der Gew.% aller in den Zusammensetzungen enthaltenen Bestandteile ergibt 100.

Die erfindungsgemäßen Zusammensetzungen werden hergestellt, indem man die jeweiligen Bestandteile in bekannter Weise vermischt und bei Temperaturen von 200°C bis 300°C in üblichen Aggregaten wie Innenknetem, Extrudem und Doppelwellenschnecken schmelzcompoundiert und schmelzextrudiert, wobei das Entformungsmittel in Form einer koagulierten Mischung eingesetzt wird.

Die Vermischung der einzelnen Bestandteile kann in bekannter Weise sowohl sukzessive als auch simultan erfolgen, und zwar sowohl bei etwa 20°C (Raumtemperatur) als auch bei höherer Temperatur.

Die erfindungsgemäßen Formmassen können zur Herstellung von Formkörpern jeder Art verwendet werden. Insbesondere können Formkörper durch Spritzguss hergestellt werden. Sie sind insbesondere geeignet zur Herstellung von Innenausbauteilen für Kraftfahrzeuge, insbesondere Personen- und Lastkraftwagen, Schienenfahrzeuge, Schiffe und Busse. Beispiele für weitere Formkörper sind: Gehäuseteile jeder Art, beispielsweise für Haushaltsgeräte wie Monitore, Flatscreens, Drucker, Kopierer sowie Abdeckplatten für den Bausektor.

Eine weitere Form der Verarbeitung ist die Herstellung von Formkörpern durch Tiefziehen aus vorher hergestellten Platten oder Folien.

Aufgrund ihrer verbesserten Hafteigenschaften sind die erfindungsgemäßen Zusammensetzungen besonders geeignet zur Herstellung von Verbundmaterialien mit Urethanen. Derartige Verbundformkörper finden beispielsweise Verwendung als Innenausbauteile für Kraft-, Schienen-, Luft-, und Wasserfahrzeuge, insbesondere im Armaturenbereich.

Die Erfindung umfasst daher auch Verbundmaterialien, die mindestens eine erste Schicht (1) und eine zweite Schicht (2) enthalten und worin Schicht (1) mindestens eine erfindungsgemäße Polycarbonat-Zusammensetzung und Schicht (2) mindestens ein Polyurethan enthalten.

Gemäß einer bevorzugten Ausführungsform der Erfindung ist Schicht (1) unmittelbar mit Schicht (2) verbunden.

Als Schicht (2) wird vorzugsweise ein Polyurethanschaum oder eine kompakte Polyurethanschicht eingesetzt.

Die erfindungsgemäß zum Einsatz kommenden Polyurethane bzw. Polyurethanhamstoffe erhält man durch Umsetzung von Polyisocyanaten mit H-aktiven polyfunktionellen Verbindungen, vorzugsweise Polyolen.

Als Polyisocyanate kommen bevorzugt solche in Frage, die aus der Polyurethanchemie bekannt und dort üblicherweise eingesetzt werden. Es handelt sich dabei insbesondere um Polyisocyanate auf aromatischer Basis, z.B. 2,4-Diisocyanatotoluol, dessen technische Gemische mit 2,6-Diisocyanatotoluol, 4,4'-Diisocyanatodiphenylmethan, dessen Gemische mit den entsprechenden 2,4'- und 2,2'-Isomeren, Polyisocyanatgemische der Diphenylmethanreihe, wie sie durch Phosgenierung von Anilin/Formaldehyd-Kondensaten in an sich bekannter Weise gewonnen werden können, die Biuret- oder Isocyanatgruppen aufweisenden Modifizierungsprodukte dieser technischen Polyisocyanate und insbesondere NCO-Prepolymere der genannten Art auf Basis dieser technischen Polyisocyanate einerseits und einfachen Polyolen und/oder Polyetherpolyolen und/oder Polyesterpolyolen andererseits sowie beliebige Gemische derartiger Isocyanate, sofern sie ausreichend lagerstabil sind.

Unter den höhermolekularen, modifizierten Polyisocyanaten sind insbesondere die aus der Polyurethanchemie bekannten Prepolymeren mit endständigen Isocyanatgruppen des Molekulargewichtsbereichs 400 bis 10.000, vorzugsweise 600 bis 8.000 von Interesse. Diese Verbindungen werden in an sich bekannter Weise durch Umsetzung von überschüssigen Mengen an einfachen Polyisocyanaten der beispielhaft genannten Art mit organischen Verbindungen mit mindestens zwei gegenüber Isocyanatgruppen reaktionsfähigen Gruppen, insbesondere organischen Polyhydroxylverbindungen hergestellt. Geeignete derartige Polyhydroxylverbindungen sind sowohl einfache mehrwertige Alkohole des Molekulargewichtsbereichs 82 bis 599, vorzugsweise 62 bis 200, wie z.B. Ethylenglykol, Trimelhylolpropan, Propandiol-1,2 oder Butandiol-1,4 oder Butandiol-2,3, insbesondere jedoch höhermolekulare Polyetherpolyole und/oder Polyesterpolyole der aus der Polyurethanchemie an sich bekannten Art mit Molekulargewichten von 600 bis 8.000, vorzugsweise 800 bis 4.000, die mindestens zwei, ind er Regel 2 bis 8, vorzugsweise aber 2 bis 4 primäre und/oder sekundäre Hydroxylgruppen aufweisen. Selbstverständlich können auch solche NCO-Prepolymere eingesetzt werden, die beispielsweise aus niedermolekularen Polyisocyanaten der beispielhaft genannten Art und weniger bevorzugten Verbindungen mit gegenüber Isocyanatgruppen reaktionsfähigen Gruppen wie z.B. Polythioetherpolyolen, Hydroxylgruppen aufweisenden Polyacetalen, Polyhydroxypolycarbonaten, Hydroxylgruppen aufweisenden Polyesteramiden oder Hydroxylgruppen aufweisenden Copolymerisaten olefinisch ungesättigter Verbindungen erhalten worden sind.

Zur Herstellung der NCO-Prepolymeren geeignete Verbindungen mit gegenüber Isocyanatgruppen reaktionsfähigen Gruppen, insbesondere Hydroxylgruppen, sind beispielsweise die in der US-A 4 218 543 offenbarten Verbindungen. Bei der Herstellung der NCO-Prepolymeren werden diese Verbindungen mit gegenüber Isocyanatgruppen reaktionsfähigen Gruppen mit einfachen Polyisocyanaten der oben beispielhaft genannten Art unter Einhaltung eines NCO-Überschusses zur Umsetzung gebracht. Die NCO-Prepolymeren weisen im allgemeinen einen NCO-Gehalt von 10 bis 25, vorzugsweise 15 bis 22 Gew.% auf. Hieraus geht bereits hervor, dass im Rahmen der vorliegenden Erfindung unter "NCO-Prepolymeren" bzw. unter "Prepolymeren mit endständigen Isocyanatgruppen" sowohl die Umsetzungsprodukte als solche als auch die Gemische mit überschüssigen Mengen an nicht umgesetzten Ausgangspolyisocyanaten, die oft auch als "Semiprepolymere" bezeichnet werden, zu verstehen sind.

Die Polyisocyanatkomponente besitzt eine mittlere Funktionalität von 2 bis 3, bevorzugt von 2,3 bis 2,7.

Zur Einstellung eines bestimmten NCO-Gehaltes der Isocyanat-Komponente kann es sinnvoll sein, Anteile von Roh-MDI mit einem NCO-Prepolymeren abzumischen. Die im Roh-MDI enthaltenen Anteile an höherfunktionellem Material (Funktionalität >4) können ohne weiteres toleriert werden, sofern die mittlere Funktionalität von 3 bei der Isocyanat-Komponente nicht überschritten wird.

Als aliphatische Diole mit einer OH-Zahl von >500 mg KOH/g kommen die üblicherweise in der Polyurethanchemie vernetzten Kettenverlängerer in Betracht wie Ethylenglykol, Diethylenglykol, Propylenglykol, Dipropylenglykol, Butandiol-1,4, Propandiol-1,3. Bevorzugt sind Diole wie 2-Butandiol-1,4, Butendiol-1,3, Butandiol-2,3, 2-Butandiol-1,4 und/oder 2-Methylpropandiol-1,3. Selbstverständlich ist es auch möglich, die aliphatischen Diole im Gemisch untereinander einzusetzen.

Als H-aktive Komponente eignen sich Polyole mit einer mittleren OH-Zahl von 5 bis 500 mg KOH/g und einer mittleren Funktionalität von 2 bis 4. Bevorzugt sind Polyole mit einer mittleren OH-Zahl von 10 bis 50 mg KOH/g und einer mittleren Funktionalität von 2,7 bis 3. Solche Polyole stellen beispielsweise Polyhydroxypolyether dar, die aus der Polyurethanchemie bekannt sind und die durch Alkoxylierung geeigneter Startermoleküle wie Ethylenglykol, Diethylenglykol, 1,4-Dihydroxybutan, 1,6-Dihydroxyhexan, Dimethylolpropan, Glycerin, Pentaerythrit, Sorbit oder Saccharose zugänglich sind. Als Starter können ebenfalls fungieren Ammoniak oder Amine wie Ethylendiamin, Hexamethylendiamin, 2,4-Diaminotoluol, Anilin oder Aminoalkohole oder Phenole wie Bisphenol-A. Die Alkoxylierung erfolgt unter Verwendung von Propylenoxid und/oder Ethylenoxid in beliebiger Reihenfolge.

Ferner geeignet sind Polyesterpolyole, wie sie durch Umsetzung niedermolekularer Alkohole mit mehrwertigen Carbonsäuren wie Adipinsäure, Phthalsäure, Hexahydrophthalsäure, Tetrahydrophthalsäure oder den Anhydriden dieser Säuren in an sich bekannter Weise zugänglich sind, sofern die Viskosität der H-aktiven Komponente nicht zu groß wird. Ein bevorzugtes Polyol, das Estergruppen aufweist, ist Rizinusöl. Daneben sind auch Zubereitungen mit Rizinusöl, wie sie durch Auflösung von Harzen, z.B. von Aldehyd-Keton-Harzen, erhalten werden können, sowie Modifikationen von Rizinusöl und Polyole auf Basis anderer natürlicher Öle geeignet.

Ebenfalls geeignet sind solche höhermolekldaren Polyhydroxypolyether, in denen hochmolekulare Polyaddukte bzw. Polykondensate oder Polymerisate in feindisperser, gelöster oder aufgepfropfter Form vorliegen. Derartige modifizierte Polyhydroxyverbindungen werden in an sich bekannter Weise z.B. erhalten, wenn man Polyadditionsreaktionen (z.B. Umsetzungen zwischen Polyisocyanaten und aminofunktionellen Verbindungen) bzw. Polykondensationsreaktionen (z.B. zwischen Formaldehyd und Phenolen und/oder Aminen) in situ in den Hydroxylgruppen aufweisenden Verbindungen ablaufen lässt. Es ist aber auch möglich, eine fertige wässrige Polymerdispersion mit einer Polyhydroxylverbindung zu vermischen und anschließend aus dem Gemisch das Wasser zu entfernen.

Auch durch Vinylpolymerisate modifizierte Polyhydroxylverbindungen, wie sie z.B. durch Polymerisation von Styrol und Acrylnitril in Gegenwart von Polyethern oder Polycarbonatpolyolen erhalten werden, sind für die Herstellung von Polyurethanen geeignet. Bei Verwendung von Polyetherpolyolen, welche gemäß DE-A 2 442 101, DE-A 2 844 922 und DE-A 2 646 141 durch Pfropfpolymerisation mit Vinylphosphonsäureestem sowie gegebenenfalls (Meth)acrylnitril, (Meth)acrylamid oder OH-funktionellen (Meth)acrylsäureestern modifiziert wurden, erhält man Kunststoffe von besonderer Flammwidrigkeit.

Vertreter der genannten, als H-aktiven Verbindungen zu verwendenden Verbindungen sind z.B. in High Polymers, Vol. XVI, "Polyurethanes Chemistry and Technology", Saunders-Frisch (Hrg.) Interscience Publishers, New York, London, Bd. 1, S. 32-42, 44,54 und Bd. II, 1984, s. 5-6 und S. 198-199 beschrieben.

Es können auch Gemische der aufgezählten Verbindungen eingesetzt werden.

Die Begrenzung der mittleren OH-Zahl und mittleren Funktionalität der H-aktiven Komponente ergibt sich insbesondere aus der zunehmenden Versprödung des resultierenden Polyurethans. Grundsätzlich sind dem Fachmann aber die Einflussmöglichkeiten auf die polymerphysikalischen Eigenschaften des Polyurethans bekannt, so dass NCO-Komponente, aliphatisches Diol und Polyol in günstiger Weise aufeinander abgestimmt werden können.

Die Polyurethanschicht (2) kann geschäumt oder massiv, wie z.B. als Lack oder Beschichtung vorliegen.

Zu deren Herstellung können alle an sich bekannten Hilfs- und Zusatzstoffe wie z.B. Trennmittel, Treibmittel, Füllstoffe, Katalysatoren und Flammschutzmittel eingesetzt werden.

Gegebenenfalls als Hilfs- und Zusatzmittel sind dabei zu verwenden:
a) Wasser und/oder leicht flüchtige anorganische oder organische Substanzen als Treibmittel. Als organische Treibmittel kommen z.B. Aceton, Ethylacetat, halogensubstituierte Alkane wie Methylenchlorid, Chloroform, Ethylidenchlorid, Vinylidenchlorid, Monofluortrichlormethan, Chlordifluormethan, Dichlordifluormethan, ferner Butan, Hexan, Heptan oder Diethylether, als anorganische Treibmittel Luft, CO₂ oder N₂O in Frage. Eine Treibwirkung kann auch durch Zusatz von bei Temperaturen über Raumtemperatur unter Abspaltung von Gasen, beispielsweise von Stickstoff, sich zersetzenden Verbindungen, z.B. Azoverbindungen wie Azodicarbonamid oder Azoisobuttersäurenitril, erzielt werden.
b) Katalysatoren der an sich bekannten Art, z.B. tertiäre Amine wie Triethylamin, Tributylamin, N-Methylmorpholin, N-Ethylmorpholin, N,N,N',N'-Tetramethylethylendiamin, Pentamethyldiethylentriamin und höhere Homologe, 1,4-Diazabicyclo-(2,2,2)octan, N-Methyl-N'-dimethylaminoethylpiperazin, Bis-(dimethylaminoalkyl)piperazine, N,N-Dimethylbenzylamin, N,N-Dimethylcyclohexylamin, N,N-Diethylbenzylamin, Bis-(N,N-diethylaminoethyl)adipat, N,N,N',N'-Tetramethyl-1,3-butandiamin, N,N-Dimethyl-β-phenylethylamin, 1,2-Dimethylimidazol, 2-Methylimidazol, monocyclische und bicyclische Amide, Bis-(dialkylamino)alkylether sowie Amidgruppen (vorzugsweise Formamidgruppen) aufweisende tertiäre Amine. Als Katalysatoren kommen auch an sich bekannte Mannichbasen aus sekundären Aminen wie Dimethylamin und Aldehyden, vorzugsweise Formaldehyd oder Ketonen wie Aceton, Methylethylketon oder Cyclohexanon und Phenolen wie Phenol, Nonylphenol oder Bisphenol in Frage.

Gegenüber Isocyanatgruppen aktive Wasserstoffatome aufweisende teriäre Amine als Katalysator sind z.B. Triethanolamin, Triisopropanolamin, N-Methyldiethanolamin, N-Ethyldietanolamin, N,N-Dimethylethanolamin, deren Umsetzungsprodukte mit Alkylenoxiden wie Propylenoxid und/oder Ehtylenoxid sowie sekundärtertiäre Amine.

Als Katalysatoren kommen ferner an sich bekannte Silaamine mit Kohlenstoff-Silicium-Bindungen in Frage, z.B. 2,2,4-Trimethyl-2-silamorpholin und 1,3-Diethylaminomethyltetramethyldisiloxan.

Als Katalysatoren kommen auch stickstoffhaltige Basen wie Tetraalkylammoniumhydroxide, ferner Alkalihydroxide wie Natriumhydroxid, Alkaliphenolate wie Natriumphenolat oder Alkalialkoholate wie Natriummethylat in Betracht. Auch Hexahydrotriazine können als Katalysatoren eingesetzt werden.

Die Reaktion zwischen NCO-Gruppen und Zerewitinoff-aktiven Wasserstoffatomen wird in an sich bekannter Weise auch durch Lactame und Azalactame stark beschleunigt, wobei sich zunächst ein Assoziat zwischen dem Lactam und der Verbindung mit acidem Wasserstoff ausbildet.

Es können auch organische Metallverbindungen, insbesondere organische Zinnverbindungen, als Katalysatoren verwendet werden. Als organische Zinnverbindungen kommen neben schwefelhaltigen Verbindungen wie Di-noctyl-zinn-mercaptid vorzugsweise Zinn(II)-salze von Carbonsäuren wie Zinn(II)-acetat, Zinn(II)-octoat, Zinn(II)-ethylhexoat und Zinn(II)-laurat und die Zinn(IV)-Verbindungen, z.B. Dibutylzinnoxid, Dibutylzinndichlorid, Dibutylzinndiacetat, Dibutylzinndilaurat, Dibutylzinnmaleat oder Dioctylzinndiacetat in Betracht.

Selbstverständlich können alle oben genannten Katalysatoren als Gemische eingesetzt werden. Von besonderem Interesse sind dabei Kombinationen aus organischen Metallverbindungen und Amidinen, Aminopyridinen oder Hydrazinopyridinen.

Die Katalysatoren werden in der Regel in einer Menge von etwa 0,001 und 10 Gew.%, bezogen auf die Gesamtmenge an Verbindungen mit mindestens zwei gegenüber Isocyanaten reaktionsfähigen Wasserstoffatomen, eingesetzt.
c) Oberflächenaktive Zusatzstoffe wie Emulgatoren und Schaumstabilisatoren. Als Emulgatoren kommen z.B. die Natriumsalze von Rizinusölsulfonaten oder Salze von Fettsäuren mit Aminen wie ölsaures Diethylamin oder stearinsaures Diethanolamin in Frage. Auch Alkali- oder Ammoniumsalze von Sulfonsäuren wie etwa von Dodecylbenzolsulfonsäure oder Dinaphthylmethandisulfonsäure oder von Fettsäuren wie Rizinolsäure oder von polymeren Fettsäuren können als oberflächenaktive Zusatzstoffe mitverwendet werden.

Als Schaumstabilisatoren kommen vor allem Polyethersiloxane, speziell wasserlösliche Vertreter, in Frage. Diese Verbindungen sind im allgemeinen so aufgebaut, dass ein Copolymerisat aus Ethylenoxid und Propylenoxid mit einem Polydimethylsiloxanrest verbunden ist. Von besonderem Interesse sind vielfach über Allophanatgruppen verzweigte Polysiloxan-Polyoxyalkylen-Copolymere.
d) Reaktionsverzögerer, z.B. sauer reagierende Stoffe wie Salzsäure oder organische Säurehalogenide, ferner Zellregler der an sich bekannten Art wie Paraffine oder Fettalkohole oder Dimethylpolysiloxane sowie Pigmente oder Farbstoffe und Flammschutzmittel der an sich bekannten Art, z.B. Tris-chlorethylphosphat, Trikresylphosphat oder Ammoniumphosphat und -polyphosphat, ferner Stabilisatoren gegen Alterungs- und Witterungseinflüsse, Weichmacher und fungistatisch und bakteriostatisch wirkende Substanzen sowie Füllstoffe wie Bariumsulfat, Kieselgut, Ruß oder Schlämmkreide.

Weitere Beispiele von gegebenenfalls erfindungsgemäß mitzuverwendenden oberflächenaktiven Zusatzstoffen und Schaumstabilisatoren sowie Zellreglern, Reaktionsverzögerern, Stabilisatoren, flammhemmenden Substanzen, Weichmachern, Farbstoffen und Füllstoffen sowie fungistatisch und bakteriostatisch wirksamen Substanzen sind dem Fachmann bekannt und in der Literatur beschrieben.

Gemäß einer weiteren bevorzugten Ausfiihrungsform der Erfindung umfasst das erfindungsgemäße Verbundmaterial mindestens noch eine weitere polymere Schicht (3), insbesondere eine Schicht auf Basis von Polyvinylchlorid (PVC) oder einem thermoplastischen Urethan (TPU). Schicht (3) ist vorzugsweise unmittelbar mit Schicht (2) verbunden.

Das erfindungsgemäße Verbundmaterial zeichnet sich insbesonders durch eine hervorragende Schaumadhäsion zwischen Schicht (1) und Schicht (2), bestimmt gemäß doppeltem Klimawechseltest KWT, aus. Dabei beträgt die Abnahme der Schaumhaftung zwischen Schicht (1) und Schicht (2) nach doppeltem Klimawechseltest höchstens 35 %.

Die Verbunde können in bekannter Weise hergestellt werden. Vorzugsweise wird Schicht (1) aus der erfindungsgemäßen Polycarbonat-Zusammensetzung vorgefertigt und darauf das Polyurethanreaktionssystem aufgebracht und ausreagiert. Je nach Reaktivität der Polyurethanreaktionskomponenten können diese bereits vorgemischt sein oder während des Auftragens in bekannter Weise vermischt werden. Das Auftragen erfolgt vorzugsweise durch Sprühen, Rakeln oder Kalandrieren. Es ist aber auch möglich, die erfindungsgemäßen Verbunde durch Coextrusion nach bekannten Methoden herzustellen. Dabei wird das teilchenformige Material vorzugsweise in einer der Polyurethanreaktionskomponenten eingebracht, bevor das System aufgetragen wird.

Insbesondere werden die Polyurethanreaktionskomponenten nach dem an sich bekannten Einstufenverfahren, dem Prepolymerverfahren oder dem Semiprepolymerverfahren zur Umsetzung gebracht. Einzelheiten über Verarbeitungseinrichtungen werden im Kunststoff-Handbuch, Band VII, herausgegeben von Vieweg und Höchtlen, Carl-Hanser-Verlag, München 1966, z.B. auf den Seiten 121 bis 205 beschrieben.

Bei der PU-Schaumstoffherstellung kann erfindungsgemäß die Verschäumung auch in geschlossenen Formen durchgeführt werden. Dabei wird das Reaktionsgemisch in eine Form eingetragen, in der sich bereits die Schicht (1) befindet. Als Formmaterial kommt Metall, z.B. Aluminium, oder Kunststoff, z.B. Epoxidharz, in Frage.

In der Form schäumt das schäumfähige Reaktionsgemisch auf und bildet den Verbund-Formkörper. Die Formverschäumung kann dabei so durchgeführt werden, dass das Formteil an seiner Oberfläche Zellstruktur aufweist, sie kann aber auch so durchgeführt werden, dass das Formteil eine kompakte Haut und einen zelligen Kern auf weist. Dabei kann man in diesem Zusammenhang so vorgehen, dass man in die Form so viel schäumfähiges Reaktionsgemisch einträgt, dass der gebildete Schaumstoff die Form gerade ausfüllt. Man kann aber auch so arbeiten, dass man mehr schäumfähiges Reaktionsgemisch in die Form einträgt, als zur Ausfüllung des Forminneren mit Schaumstoff notwendig ist. Im letzt genannten Fall wird somit in an sich bekannter Weise unter "ober-charging" gearbeitet.

Bei der Formverschäumung werden vielfach an sich bekannte "äußere Trennmittel" wie Silikonöle mitverwendet. Man kann aber auch sogenannte "innere Trennmittel", gegebenenfalls im Gemisch mit äußeren Trennmitteln, verwenden.

Erfindungsgemäß lassen sich auch kalthärtende Schaumstoffe herstellen.

Selbstverständlich können aber auch Schaumstoffe durch Blockverschäumung oder nach dem an sich bekannten Doppeltransportbandverfahren hergestellt werden, das für die kontinuierliche Herstellung der erfindungsgemäßen Verbunde bevorzugt ist.

Auch bei diesen Verfahrensweisen wird das teilchenformige Material vor dem Ausreagieren der PUR-Komponenten in einer Komponente verteilt.

Bevorzugt wird auch die Herstellung von Polyurethan-Verbundkörpern in Sandwichbauweise. Das Verfahren kann dabei sowohl als Depot- oder Hüllbauverfahren ausgestattet sein. Sowohl die Depotbauweise als auch die Hüllbauweise sind an sich bekannt. Im Depotverfahren (Füllbauweise) werden zwei Halbschalen (z.B. Deckschichten aus Kunststoffen) vorgefertigt, in ein Werkzeug eingelegt und der Hohlraum zwischen den Schalen mit dem PUR-Schaum ausgeschäumt. In der Hüllbauweise wird ein Kern aus PUR-Schaum in einem Werkzeug vorgelegt und dann mit einem geeigneten Hüllmaterial, z.B. mit einem der genannten Thermoplasten, umhüllt. Bei der Herstellung der Sandwich-Verbundkörper ist die Hüllbauweise bevorzugt.

Für die Herstellung kompakter PUR-Materialien werden die beiden PU-Reaktionskomponenten, wie oben dargestellt, durch einfaches Vermischen bei Raumtemperatur zur Reaktion gebracht.

Eine anschließende weitere Beschichtung der Schichten (1) oder (2) kann durch die üblichen, bekannten Verfahren der Lackierung, Metallisierung oder weitere Beschichtung mit einer polymeren Schicht vorgenommen werden.

Die erfindungsgemäßen Verbundmaterialien werden vorzugsweise bei der Kfz-Herstellung verwendet, insbesondere bei der Innenauskleidung, z.B. als Beschichtungsmaterial von Armaturenbrettern oder Säulenverkleidungen.

Im folgenden wird die Erfindung anhand von Ausführungsbeispielen weiter erläutert.

### Beispiele

Entsprechend den Angaben der Tabelle 1 werden vier Polycarbonat-Zusammensetzungen hergestellt, zu Prüfkörpern weiterverarbeitet und geprüft.

### Komponente A

Lineares Polycarbonat auf Basis Bisphenol A mit einer relativen Lösungsviskosität von 1,272, gemessen in CH₂Cl₂ als Lösungsmittel bei 25°C und bei einer Konzentration von 0,5 g/100 ml.

### Komponente B

Pfropfpolymerisat von 40 Gew.-Teilen eines Copolymerisats aus Styrol und Acrylnitril im Verhältnis von 72:28 auf 60 Gew.-Teile teilchenförmig vernetzten Polybutadienkautschuk (mittlerer Teilchendurchmesser d₅₀ = 0,32 µm), hergestellt durch Emulsionspolymerisation.

### Komponente C

Statistisches Copolymer aus 82 Gew.% Styrol und 18 Gew.% Maleinsäureanhydrid mit einem mittleren Molekulargewicht M_{w} von 100.000 (Cadon® DMC 250, Bayer AG , Leverkusen, Deutschland).

**Tabelle 1**

| **Komponenten (Gew: Teile)** | **Zusammensetzung** | | | |
|---|---|---|---|---|
| | **1** | **2** | **3** | **4 (Vgl.)** |
| A (Polycarbonat) | 58 | 58 | 58 | 58 |
| B (Pfropfpolymerisat) | 42 | 42 | 42 | 42 |
| C (Styrol/Maleinsäureanhydrid) | 2 | 0,5 | 5 | 0 |

### Herstellung und Prüfung der erfindungsgemäßen Verbundmaterialien

Das Mischen der Komponenten der Polycarbonat-Zusammensetzungen erfolgt auf einem 3-1-Innenkneter. Proben der Polycarbonat-Zusammensetzungen werden auf einer Spritzgießmaschine vom Typ Arburg 270 E bei 260°C hergestellt.

Die Bestimmung der Kerbschlagzähigkeit aₖ der Polycarbonat-Proben erfolgt gemäß ISO 180/1 A.

Die Bestimmung der Wärmeformbeständigkeit der Polycarbonat-Proben nach Vicat B erfolgt gemäß DIN 53 460 (ISO 306) an Stäben der Abmessung 80 x 10 x 4mm³.

Der Steilabfall und das Modul der Polycarbonat-Proben werden gemäß ISO 180/1 A bzw. ISO 527 bestimmt.

Zur Messung der Schaumadhäsion werden die Polycarbonat-Proben mit einer dünnen 1 cm Schicht aus 100 Gew.-Teilen Polyurethan Bayfill® VP PU51 IF03 und 44 Gew.-Teile Desmodur® VP 44 V20LF (Bayer AG, Leverkusen, Deutschland) überzogen und die Trennung des Verbundes durch einen üblichen Rollenschälversuch in Anlehnung an DIN 53 357 getestet. Vor der Haftungsprüfung wird der Schicht-Verbund einem doppelten Klimawechseltest (KWT 02A) unterzogen (10-tägige Belastung in einem Klimawechsel mit Zyklen von -40°C bis 80°C, 0 bis 80 % relativer Luftfeuchtigkeit und einer Zykluszeit von 24 Stunden). Die anschließende Haftungsprüfung wird durch einen 90°-Schälversuch in Anlehnung an DIN 53 357 nach Reduzierung der Schaumdicke auf 2 mm durchgeführt.

Die Testergebnisse der Zusammensetzungen 1 bis 4 sind in Tabelle 2 zusammengefasst.

**Tabelle 2**

| **Eigenschaften** | | **Zusammensetzung** | | | |
|---|---|---|---|---|---|
| | | **1** | **2** | **3** | **4 (Vgl.)** |
| aₖ Izod (260°C) | 23°C [kJ/m²] | 67 | 63 | 74 | 62 |
| | -40°C [kJ/m²] | 76 | 66 | 81 | 64 |
| Steilabfall | [°C] | -45 | -45 | -45 | -45 |
| VicatB | [°C] | 117 | 119 | 121 | 120 |
| Modul | [MPa] | 2150 | 2140 | 2210 | 2130 |
| Schaumadhäsion nach doppeltem KWT (02A) | [%] | -2 | -30 | -31 | -38 |

Die Testergebnisse zeigen, dass die erfindungsgemäßen Zusammensetzungen 1 bis 3, die Styrol/Maleinsäureanhydrid-Copolymerisat enthalten, verbesserte Schaumadhäsionswerte aufweisen im Vergleich zu Vergleichsprobe 4, die kein Styrol/Maleinsäureanhydrid-Copolymerisat enthält. Die erfindungsgemäße Zusammensetzung 1 mit einem Gehalt an Styrol/Maleinsäureanhydrid-Copolymerisat von 1,9 Gew.% (= 2,0 Gew.-Teile, bezogen auf 100 Gew.-Teile Komponente A + B) weist eine besonders gute Schaumadhäsion mit einer Haftungsverschlechterung von nur 2 % im doppelten Klimawechseltest auf.

Die Testergebnisse zeigen ferner, dass die erfindungsgemäßen Proben 1 bis 3 neben der erhöhten Schaumadhäsion eine gleichbleibend gute Kerbschlagzähigkeit aₖ und Wärmeformbeständigkeit nach Vicat B aufweist.

## Patentansprüche

1. Verbundmaterial enthaltend mindestens eine erste Schicht (1) und eine zweite Schicht (2), worin Schicht (1) mindestens eine Polycarbonat-Zusammensetzung enthaltend
(A) aromatisches Polycarbonat und/oder Polyestercarbonat,
(B) Pfropfpolymerisat und
(C) Copolymerisat aus Styrol und wenigsten einem Monomeren enthaltend wenigstens eine Carboxylgruppe, wobei das Copolymerisat ein mittleres Molekulargewicht M_{w} von ≥ 10.500 g/Mol aufweist, und wobei das Copolymere ein oder mehrere andere Vinylmonomere enthalten kann,
und Schicht (2) mindestens ein Polyurethan enthält.

2. Verbundmaterial nach Anspruch 1, wobei Schicht (1) unmittelbar mit Schicht (2) verbunden ist.

3. Verbundmaterial nach Anspruch 1 oder 2, worin Schicht (2) ein Polyurethanschaum oder eine kompakte Polyurethanschicht ist.

4. Verbundmaterial nach einem der Ansprüche 1 bis 3, wobei dieses mindestens eine weitere polymere Schicht (3) umfasst.

5. Verbundmaterial nach Anspruch 4, worin die weitere polymere Schicht (3) eine Schicht auf Basis von Polyvinylchlorid (PVC) oder einem thermoplastischem Urethan (TPU) ist.

6. Verbundmaterial nach Anspruch 4 oder 5, worin Schicht (3) unmittelbar mit Schicht (2) verbunden ist.

7. Verbundmaterial nach einem der Ansprüche 1 bis 6, wobei die Abnahme der Schaumhaftung zwischen Schicht (1) und Schicht (2) nach doppeltem Klimawechseltest (KWT) höchstens 35 % beträgt.

8. Verwendung eines Verbundmaterials nach einem der Ansprüche 1 bis 7 als Werkmaterial im Kraft-, Schienen-, Luft-, oder Wasserfahrzeugbau.

## Claims

1. Composite material comprising at least a first layer (1) and a second layer (2), wherein layer (1) comprises at least one polycarbonate composition comprising
(A) aromatic polycarbonate and/or polyester-carbonate
(B) graft polymer and
(C) copolymer of styrene and at least one monomer containing at least one carboxyl group, the copolymer having an average molecular weight M_{w} of ≥ 10,500 g/mol, and it being possible for the copolymer to comprise one or more other vinyl monomers,
and layer (2) comprises at least one polyurethane.

2. Composite material according to claim 1, wherein layer (1) is bonded directly to layer (2).

3. Composite material according to claim 1 or 2, wherein layer (2) is a polyurethane foam or a compact polyurethane layer.

4. Composite material according to one of claims 1 to 3, wherein this comprises at least one further polymeric layer (3).

5. Composite material according to claim 4, wherein the further polymeric layer (3) is a layer based on polyvinyl chloride (PVC) or a thermoplastic urethane (TPU).

6. Composite material according to claim 4 or 5, wherein layer (3) is bonded directly to layer (2).

7. Composite material according to one of claims 1 to 6, wherein the decrease in foam adhesion between layer (1) and layer (2) after a double alternating climate test (ACT) is not more than 35%.

8. Use of a composite material according to one of claims 1 to 7 as a work material in motor, rail, air or water vehicle construction.

## Revendications

1. Matériau composite contenant au moins une première couche (1) et une deuxième couche (2), la couche (1) contenant au moins une composition de polycarbonate constituée elle-même de
A. un polycarbonate et/ou polyester-carbonate aromatique,
B. un polymère greffé et
C. un copolymère du styrène et d'au moins un monomère contenant au moins un groupe carboxyle, ce copolymère ayant un poids moléculaire moyen M_{w} supérieur ou égal à 10 500 g/mol et pouvant contenir un ou plusieurs autres monomères vinyliques,
et la couche (2) contient au moins un polyuréthane.

2. Matériau composite selon revendication 1 dans lequel la couche (1) est associée directement à la couche (2).

3. Matériau composite selon revendication 1 ou 2, dans lequel la couche (2) consiste en une mousse de polyuréthane ou en un polyuréthane compact.

4. Matériau composite selon l'une des revendications 1 à 3, contenant au moins une autre couche polymère (3).

5. Matériau composite selon revendication 4 dans lequel l'autre couche polymère (3) est une couche à base de chlorure de polyvinyle (PVC) ou d'un uréthane thermoplastique (TPU).

6. Matériau composite selon revendication 4 ou 5, dans lequel la couche (3) est directement associée à la couche (2).

7. Matériau composite selon une des revendications 1 à 6 pour lequel la diminution de l'adhérence aux mousses entre la couche (1) et la couche (2) après double exposition au test de variations climatiques (TVC) est de 35 % au maximum.

8. Utilisation d'un matériau composite selon l'une des revendications 1 à 7 dans la construction de véhicules utilitaires, de véhicules ferroviaires, d'aéronefs ou de navires.
